# EUROPEAN PATENT APPLICATION

(11) **EP 4 550 650 A1**
(43) Date of publication of application: **07.05.2025**
(21) Application number: 22946031.6
(22) Date of filing: 11.10.2022
(51) Int. Cl.: H02M 1/36, H02M 3/07

(54) **INITIAL DRIVING DEVICE AND METHOD FOR SOLID-STATE TRANSFORMER**

(30) Priority: 01.07.2022 KR 20220081364
(71) Applicant: Hyosung Corporation, Seoul 04144 (KR)
(72) Inventor: BYEN, Byeng Joo, Suwon-si Gyeonggi-do 16695 (KR); SEO, Hae Won, Seoul 03789 (KR); JEONG, Byung Hwan, Gwacheon-si Gyeonggi-do 13835 (KR)
(74) Representative: Viering, Jentschura & Partner mbB Patent- und Rechtsanwälte
(86) International application number: PCT/KR2022/015254
(87) International publication number: WO 2024/005266

(57) **Abstract**

The present invention relates to an initial driving device and method of a solid-state transformer which reduces the overall number of solid-state transformer components and improves system reliability by charging an internal capacitor of the solid-state transformer using an existing battery instead of a separate external power source.

The initial driving device of a solid-state transformer of the present invention is composed of an alternating current (AC)/direct current (DC) converter configured to convert system power to direct current, a high voltage converter configured to convert an output of the AC/DC converter to a high voltage, a medium frequency transformer (MFT) configured to convert an output of the high voltage converter to a low voltage, a low voltage converter configured to convert an output of the MFT to a charging voltage of an electric vehicle or battery, and a controller configured to control operations of the AC/DC converter, the high voltage converter, the MFT, and the low voltage converter.

## Description

### [Technical Field]

The present invention relates to initial driving device and method of a solid-state transformer, and more specifically, to performing stable initial driving of a solid-state transformer.

### [Background Art]

Generally, in order to charge a vehicle battery of an electric vehicle, a voltage of 60 Hz, 25 kV is stepped down using a transformer to convert the voltage to a direct current (DC) voltage of a predetermined size for charging. The transformer and alternating current (AC)/DC converter account for a lot of weight, and are components that require weight reduction.

Specifically, since a main transformer operates at a low frequency of 60 Hz, a value of inductance required for impedance matching is large, and thus many transformer windings should be wound or a lot of iron cores should be used, so that a weight and a volume are large and power density is relatively low.

Accordingly, much studies have been conducted to reduce the weight of transformers and AC/DC converters operating at commercial frequencies, and in one of the studies, the weight and volume of the transformer are reduced using a semiconductor element to raise an operating frequency of the transformer to several kHz to several tens of kHz, which is a frequency much greater than 60 Hz.

Like the above, a device that converts low-frequency high-voltage input power to high-frequency voltage/current using a semiconductor element, and then converts the high-frequency voltage/current to a low DC voltage required for a vehicle after passing through a high-frequency transformer is referred to as a solid-state transformer (SST) or an intelligent transformer.

This solid-state transformer is gaining importance due to advantages such as a reduced system size, power quality compensation, and the like compared to existing low-frequency transformers, and research to perform stable initial operation has continued.

For example, in Korean Laid-Open Patent Publication No. 10-2017-0054340, an initial driving device of a solid-state transformer which determines whether a voltage of a secondary system power source is present and initially charges the solid-state transformer using the secondary system power source or chargeable external power source for initially driving a solid-state transformer which can be connected to a primary system power source was proposed.

However, even in this case, there is a disadvantage in that an external power source should be separately applied for initial charging.

### [Disclosure]

### [Technical Problem]

The present invention is directed to providing an initial driving device and method of a solid-state transformer capable of charging an internal capacitor of a solid-state transformer by itself without a separate external power source.

The present invention is directed to providing an initial driving device and method of a solid-state transformer capable of reducing the overall number of solid-state transformer components and improving system reliability by charging an internal capacitor of the solid-state transformer using an existing battery instead of a separate external power source.

### [Technical Solution]

One aspect of the present invention provides an initial driving device of a solid-state transformer including an alternating current (AC)/direct current (DC) converter configured to convert system power to direct current, a high voltage converter configured to convert an output of the AC/DC converter to a high voltage, a medium frequency transformer (MFT) configured to convert an output of the high voltage converter to a low voltage, a low voltage converter configured to convert an output of the MFT to a charging voltage of an electric vehicle or battery, and a controller configured to control operations of the AC/DC converter, the high voltage converter, the MFT, and the low voltage converter.

Here, the initial driving device of the solid-state transformer may further include a first power supply configured to supply power to the AC/DC converter, a second power supply configured to supply power to the high voltage converter, and a third power supply configured to supply power to the low voltage converter and the controller.

Further, the first power supply and the second power supply may operate with a voltage of a capacitor charged in the high voltage converter.

Here, the third power supply may operate with a voltage of a capacitor charged in the low voltage converter configured to charge the battery.

Further, the third power supply may operate with a voltage charged in the battery during an initial operation.

Here, the controller may charge the capacitors in the high voltage converter and the low voltage converter using the low voltage converter connected to the battery on the basis of the voltage charged in the battery during the initial operation, and may charge the capacitors in the high voltage converter and the low voltage converter from system power during normal operation.

Further, the controller may charge a voltage of a high voltage converter capacitor and a voltage of a low voltage converter capacitor to an initial operating voltage in an initial charging section.

Here, the controller may require time for power of the high voltage converter to be normalized in a power supply initialization section, and thus may wait without performing charging of the voltage of the high voltage converter capacitor and the voltage of the low voltage converter capacitor until the initial operation is recognized.

Further, the controller may perform the normal operation in a normal state control section to charge the voltage of the high voltage converter capacitor and the voltage of the low voltage converter capacitor.

In addition, the controller may maintain the normal operation in a normal state reaching section.

Another aspect of the present invention provides an initial driving method of a solid-state transformer including an initial charging operation of charging, by a controller, a voltage of a high voltage converter capacitor and a voltage of a low voltage converter capacitor to an initial operating voltage, a power supply initialization operation of waiting, by the controller, without performing charging of the voltage of the high voltage converter capacitor and the voltage of the low voltage converter capacitor until an initial operation of a high voltage converter is recognized, a normal state control operation of performing, by the controller, normal operation to charge the voltage of the high voltage converter capacitor and the voltage of the low voltage converter capacitor, and a normal state reaching operation of maintaining, by the controller, a normal operation.

### [Advantageous Effects]

An initial driving device and method of a solid-state transformer according to the present invention has an advantage of being capable of charging an internal capacitor of a solid-state transformer by itself without a separate external power source.

Further, the initial driving device and method of the solid-state transformer according to the present invention has an advantage of being capable of reducing the overall number of solid-state transformer components and improving system reliability by charging the internal capacitor of the solid-state transformer using an existing battery instead of a separate external power source.

### [Description of Drawings]

FIG. 1 is a view illustrating an initial driving device of a solid-state transformer according to one embodiment of the present invention.
FIG. 2 is a graph for describing the operation of the initial driving device of the solid-state transformer in FIG. 1.
FIG. 3 is an operation flow chart illustrating an initial driving method of the solid-state transformer according to one embodiment of the present invention.

### [Modes of the Invention]

Specific embodiments for carrying out the present invention will be described with reference to the accompanying drawings.

Since the present invention may be variously changed and have various embodiments, specific embodiments will be exemplified in the drawings and described in detail in the detailed description. This is not intended to limit the present invention to specific embodiments, and it may be understood that all changes, equivalents, and substitutions included in the spirit and technical scope of the present invention are included.

Hereinafter, an initial driving device and method of a solid-state transformer according to the present invention will be described in detail with reference to the accompanying drawings.

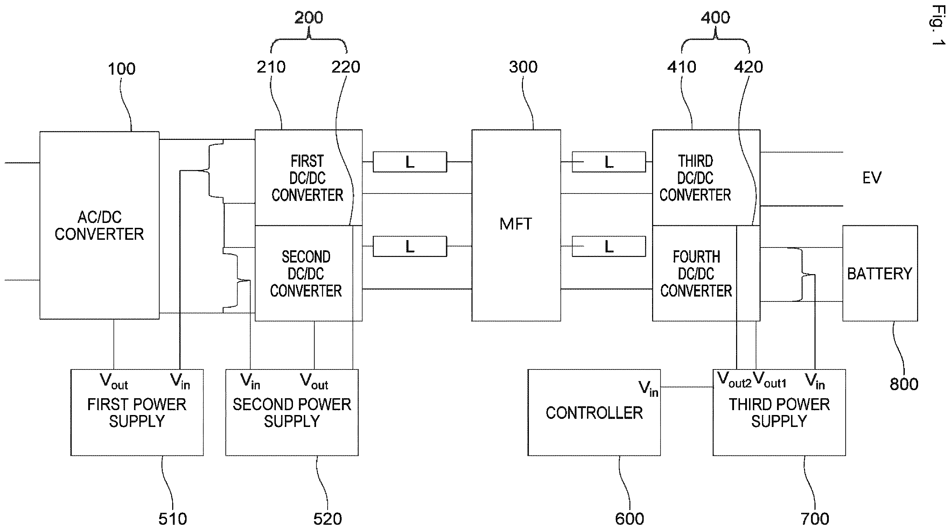

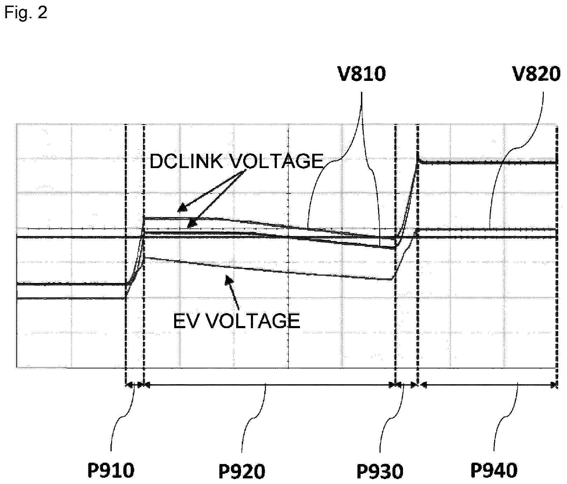

FIG. 1 is a view illustrating an initial driving device of a solid-state transformer according to one embodiment of the present invention, and FIG. 2 is a detailed graph for describing FIG. 1 in detail.

Hereinafter, the initial driving device of the solid-state transformer according to one embodiment of the present invention will be described with reference to FIGS. 1 and 2.

First, referring to FIG. 1, the initial driving device of the solid-state transformer according to one embodiment of the present invention is composed of an alternating current (AC)/direct current (DC) converter 100 which converts system power to direct current, a high voltage converter 200 which converts the output of the AC/DC converter 100 to a high voltage, a medium frequency transformer (MFT) 300 which converts the output of the high voltage converter 200 to a low voltage, a low voltage converter 400 which converts the output of the MFT 300 to a charging voltage of an electric vehicle or battery 800, and a controller 600 configured to control the operations of the AC/DC converter 100, the high voltage converter 200, the MFT 300, and the low voltage converter 400.

Here, the initial driving device of the solid-state transformer of the present invention may further include a first power supply 510 which supplies power to the AC/DC converter 100, a second power supply 520 which supplies power to the high voltage converter 200, and a third power supply 700 which supplies power to the low voltage converter 400 and the controller 600.

In this case, the first power supply 510 and the second power supply 520 may operate with a voltage of a capacitor charged in the high voltage converter 200, and the third power supply 700 may operate with a voltage of a capacitor charged in the low voltage converter 400 charged from the battery 800. Further, the third power supply 700 may operate with a voltage charged in the battery 800 during an initial operation.

Meanwhile, the controller 600 charges the capacitors in the high voltage converter 200 and the low voltage converter 400 using the low voltage converter 400 connected to the battery 800 on the basis of the voltage charged in the battery 800 during the initial operation. Further, the controller 600 charges the capacitors in the high voltage converter 200 and the low voltage converter 400 from the system power during a normal operation.

FIG. 2 is a graph for describing the operation of the initial driving device of the solid-state transformer in FIG. 1

As shown in FIG. 2, the controller 600 of the present invention charges a voltage V810 of the high voltage converter capacitor and a voltage V820 of the low voltage converter capacitor to an initial operating voltage in an initial charging section P910.

Here, the controller 600 requires time for the power of the high voltage converter 200 to be normalized in a power supply initialization section P920, and thus waits without performing charging of the voltage V810 of the high voltage converter capacitor and the voltage V820 of the low voltage converter capacitor until the initial operation is recognized.

Further, the controller 600 performs the normal operation in a normal state control section P930 to charge the voltage V810 of the high voltage converter capacitor and the voltage V820 of the low voltage converter capacitor.

In the present invention, the controller 600 charges the voltage V810 of the high voltage converter capacitor and the voltage V820 of the low voltage converter capacitor to the initial operating voltage in the initial charging section P910, and in this case, may charge the capacitors of a first DC/DC converter 210, a second DC/DC converter 220, and a third DC/DC converter 410 to the initial operating voltage using a fourth DC/DC converter 420 on the basis of the power of the battery 800.

Thereafter, the controller 600 of the present invention waits without performing the charging of the voltage V810 of the high voltage converter capacitor and the voltage V820 of the low voltage converter capacitor until the initial operation of the high voltage converter 200 is recognized in the power supply initialization section P920 because a time delay until the first power supply 510 and the second power supply 520, which use the capacitor voltages charged to the initial operating voltage as operating power, normally operate is required.

Thereafter, the controller 600 performs the normal operation in the normal state control section P930 to charge the voltage V810 of the high voltage converter capacitor and the voltage V820 of the low voltage converter capacitor when the first power supply 510 and the second power supply 520 normally operate.

In this case, the charging of the voltage V810 of the high voltage converter capacitor and the voltage V820 of the low voltage converter capacitor is performed with system power, and when the capacitors are charged to the normal operation, the controller 600 maintains normal operation in a normal state reaching section P940.

The above-described initial driving device of the solid-state transformer according to the present invention may reduce the overall number of solid-state transformer components and improve system reliability by charging an internal capacitor of the solid-state transformer using the existing battery 800 instead of a separate external power source.

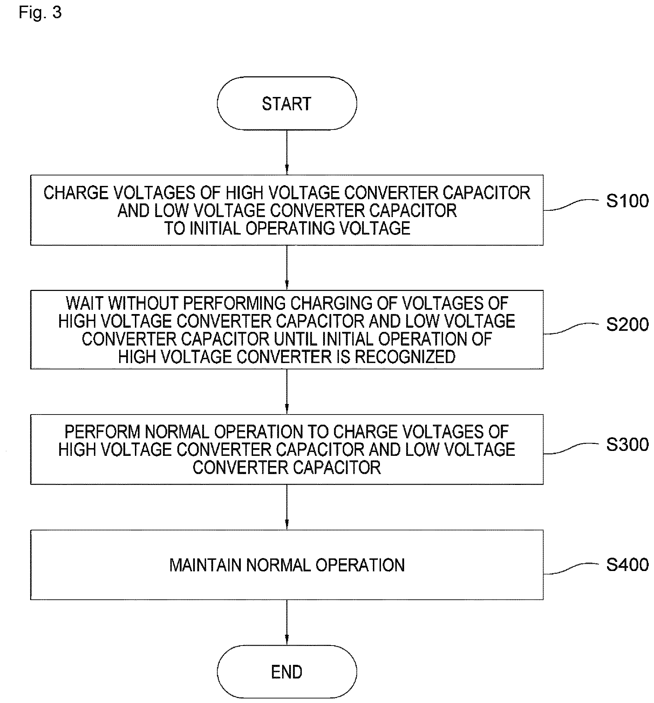

FIG. 3 is an operation flow chart illustrating an initial driving method of the solid-state transformer according to one embodiment of the present invention.

As shown in FIG. 3, the initial driving method of the solid-state transformer according to the present invention includes an operation S100 of charging, by the controller 600 of the initial driving device of the solid-state transformer, the voltage V810 of the high voltage converter capacitor and the voltage V820 of the low voltage converter capacitor to the initial operating voltage, an operation S200 of waiting, by the controller 600, without performing the charging of the voltage V810 of the high voltage converter capacitor and the voltage V820 of the low voltage converter capacitor until the initial operation of the high voltage converter 200 is recognized, an operation S300 of performing, by the controller 600, a normal operation to charge the voltage V810 of the high voltage converter capacitor and the voltage V820 of the low voltage converter capacitor, and an operation S400 of maintaining, by the controller 600, the normal operation.

Here, the controller 600 charges the voltage V810 of the high voltage converter capacitor and the voltage V820 of the low voltage converter capacitor to the initial operating voltage in the initial charging operation S100, and in this case, may charge the capacitors of the first DC/DC converter 210, the second DC/DC converter 220, and the third DC/DC converter 410 to the initial operating voltage using the fourth DC/DC converter 420 on the basis of the power of the battery 800.

Thereafter, the controller 600 of the present invention waits without performing the charging of the voltage V810 of the high voltage converter capacitor and the voltage V820 of the low voltage converter capacitor until the initial operation of the high voltage converter 200 is recognized in the power supply initialization operation S200 because a time delay until the first power supply 510 and the second power supply 520, which use the capacitor voltages charged to the initial operating voltage as operating power, normally operate is required.

The controller 600 performs the normal operation in the normal state control operation S300 to charge the voltage V810 of the high voltage converter capacitor and the voltage V820 of the low voltage converter capacitor when the first power supply 510 and the second power supply 520 normally operate.

In this case, the charging of the voltage V810 of the high voltage converter capacitor and the voltage V820 of the low voltage converter capacitor is performed with system power, and when the capacitors are charged to the normal operation, the controller 600 maintains the normal operation in the normal state reaching operation S400.

In the above-described initial driving method of the solid-state transformer according to the present invention, the overall number of solid-state transformer components may be reduced and system reliability may be improved by charging the internal capacitor of the solid-state transformer using an existing battery instead of a separate external power source.

Like the above, the initial driving device and method of the solid-state transformer according to the present invention can charge the internal capacitor of the solid-state transformer by itself without a separate external power source, and can reduce the overall number of solid-state transformer components and improve system reliability by charging the internal capacitor of the solid-state transformer using an existing battery instead of a separate external power source.

The above description includes examples of one or more embodiments. Of course, it is not possible to describe all possible combinations of components or methods to describe the above-described embodiments, and it may be recognized by those skilled in the art that additional combinations and substitutions are possible. Accordingly, the described embodiments include all alternatives, modifications, and alterations that fall within the spirit and scope of the appended claims.

### [Industrial Applicability]

The present invention relates to initial driving device and method of a solid-state transformer, and may be used in the solid-state transformer field.

## Claims

1. An initial driving device of a solid-state transformer, comprising:
an alternating current (AC)/direct current (DC) converter configured to convert system power to direct current;
a high voltage converter configured to convert an output of the AC/DC converter to a high voltage;
a medium frequency transformer (MFT) configured to convert an output of the high voltage converter to a low voltage;
a low voltage converter configured to convert an output of the MFT to a charging voltage of an electric vehicle or battery; and
a controller configured to control operations of the AC/DC converter, the high voltage converter, the MFT, and the low voltage converter.

2. The initial driving device of claim 1, further comprising:
a first power supply configured to supply power to the AC/DC converter;
a second power supply configured to supply power to the high voltage converter; and
a third power supply configured to supply power to the low voltage converter and the controller.

3. The initial driving device of claim 2, wherein the first power supply and the second power supply operate with a voltage of a capacitor charged in the high voltage converter.

4. The initial driving device of claim 2, wherein the third power supply operates with a voltage of a capacitor charged in the low voltage converter configured to charge the battery.

5. The initial driving device of claim 2, wherein the third power supply operates with a voltage charged in the battery during an initial operation.

6. The initial driving device of claim 1, wherein the controller charges capacitors in the high voltage converter and the low voltage converter using the low voltage converter connected to the battery on the basis of the voltage charged in the battery during an initial operation, and charges the capacitors in the high voltage converter and the low voltage converter from system power during a normal operation.

7. The initial driving device of claim 1, wherein the controller charges a voltage of a high voltage converter capacitor and a voltage of a low voltage converter capacitor to an initial operating voltage in an initial charging section.

8. The initial driving device of claim 1, wherein the controller requires time for power of the high voltage converter to be normalized in a power supply initialization section, and thus waits without performing charging of a voltage of a high voltage converter capacitor and a voltage of a low voltage converter capacitor until an initial operation is recognized.

9. The initial driving device of claim 1, wherein the controller performs a normal operation in a normal state control section to charge a voltage of a high voltage converter capacitor and a voltage of a low voltage converter capacitor.

10. The initial driving device of claim 1, wherein the controller maintains a normal operation in a normal state reaching section.

11. An initial driving method of a solid-state transformer as a driving method of the solid-state transformer, comprising:
an initial charging operation of charging, by a controller, a voltage of a high voltage converter capacitor and a voltage of a low voltage converter capacitor to an initial operating voltage;
a power supply initialization operation of waiting, by the controller, without performing charging of the voltage of the high voltage converter capacitor and the voltage of the low voltage converter capacitor until an initial operation of a high voltage converter is recognized;
a normal state control operation of performing, by the controller, a normal operation to charge the voltage of the high voltage converter capacitor and the voltage of the low voltage converter capacitor; and
a normal state reaching operation of maintaining, by the controller, a normal operation.
